(19) Europäisches Patentamt
European Patent Office
Office européen des brevets

(11) **EP 3 109 797 B1**

(12) **FASCICULE DE BREVET EUROPEEN**

(45) Date de publication et mention
de la délivrance du brevet:
**24.01.2024 Bulletin 2024/04**

(51) Classification Internationale des Brevets (IPC):
**G06V 30/32** (2022.01)    **G06V 10/46** (2022.01)
**G06V 30/226** (2022.01)   **G06V 30/228** (2022.01)

(21) Numéro de dépôt: **16176132.5**

(22) Date de dépôt: **24.06.2016**

(52) Classification Coopérative des Brevets (CPC):
**G06V 10/46; G06V 30/226; G06V 30/228;
G06V 30/32; G06V 30/347**

(54) **PROCÉDÉ DE RECONNAISSANCE D'ÉCRITURE MANUSCRITE SUR UNE SURFACE PHYSIQUE**

**VERFAHREN ZUR ERKENNUNG EINES HANDSCHRIFTLICHEN TEXTES AUF EINER PHYSISCHEN OBERFLÄCHE**

**METHOD FOR RECOGNISING HANDWRITING ON A PHYSICAL SURFACE**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.06.2015 FR 1555958**

(43) Date de publication de la demande:
**28.12.2016 Bulletin 2016/52**

(73) Titulaire: **Orange
92130 Issy-les-Moulineaux (FR)**

(72) Inventeur: **LEFEBVRE, Grégoire
38920 CROLLES (FR)**

(56) Documents cités:
**EP-A2- 1 693 784     WO-A1-95/21436**

• **LEFEBVRE GRÉGOIRE ET AL: "BLSTM-RNN Based 3D Gesture Classification", 10 septembre 2013 (2013-09-10), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 381 - 388, XP047040841, ISSN: 0302-9743 ISBN: 978-3-642-24570-1 * le document en entier ***

• **CHRISTOPH AMMA ET AL: "Airwriting", PERSONAL AND UBIQUITOUS COMPUTING, SPRINGER VERLAG, LONDON, GB, vol. 18, no. 1, 1 janvier 2014 (2014-01-01), pages 191-203, XP058045738, ISSN: 1617-4909, DOI: 10.1007/S00779-013-0637-3**

• **DUFFNER STEFAN ET AL: "3D gesture classification with convolutional neural networks", 2014 IEEE INTERNATIONAL CONFERENCE ON ACOUSTICS, SPEECH AND SIGNAL PROCESSING (ICASSP), IEEE, 4 mai 2014 (2014-05-04), pages 5432-5436, XP032617733, DOI: 10.1109/ICASSP.2014.6854641**

• **JEEN-SHING WANG ET AL: "An Accelerometer-Based Digital Pen With a Trajectory Recognition Algorithm for Handwritten Digit and Gesture Recognition", IEEE TRANSACTIONS ON INDUSTRIAL ELECTRONICS, IEEE SERVICE CENTER, PISCATAWAY, NJ, USA, vol. 59, no. 7, 1 juillet 2012 (2012-07-01), pages 2998-3007, XP011417626, ISSN: 0278-0046, DOI: 10.1109/TIE.2011.2167895**

## Description

### DOMAINE TECHNIQUE

La présente invention se rapporte au domaine de la reconnaissance d'écriture manuscrite.

### ART ANTÉRIEUR

Nous assistons ces dernières années à l'explosion des interactions dites « naturelles ». De telles interactions visent à simplifier la communication homme-machine en offrant la possibilité aux utilisateurs d'interagir de manière simple et intuitive avec les terminaux. Pour cela, une solution consiste à permettre à un utilisateur d'interagir avec un terminal par l'intermédiaire de gestes en 3 dimensions. Par exemple, l'utilisateur peut vouloir changer une chaîne TV en réalisant simplement un geste rapide vers la droite avec une télécommande, ou encore activer un mode de lecture musical aléatoire sur un terminal en effectuant un geste de secousse (en anglais « shake »). Pour ce faire, soit l'environnent est instrumenté avec une caméra par exemple, soit le dispositif utilisé est instrumenté avec par exemple des capteurs inertiels de type accéléromètres, gyromètres ou magnétomètres.

Afin de permettre ce type d'interaction, de nombreux terminaux et dispositifs sont aujourd'hui équipés de tels capteurs. Par exemple, de nombreux modèles de Smartphones, de montres ou de bracelets connectés comprennent un accéléromètre, voire un gyromètre ou un magnétomètre. Différents systèmes d'analyse des données issues de ces capteurs ont été développés afin de détecter le début et la fin d'un geste, pour ensuite reconnaître la partie utile du geste. La reconnaissance de geste peut révéler une action telle que la marche, le vélo, la course à pied, ou un mouvement tel qu'une rotation, le retournement du terminal, une secousse ou une inclinaison. Ces techniques peuvent également servir à identifier un utilisateur par une signature gestuelle ou à déclencher une action sur détection d'un mouvement particulier.

Une autre forme d'interaction essentielle entre un utilisateur et un terminal concerne la saisie de texte. De nombreuses techniques ont été développées afin d'améliorer l'efficacité de la saisie, mais faute de techniques fiables et ergonomiques, l'utilisation de claviers physiques ou virtuels ou encore dans une moindre mesure l'écriture manuscrite avec un stylet ou au doigt sur un écran tactile, restent les techniques les plus employées.

Parmi les alternatives à la saisie sur clavier ou à l'écriture manuscrite sur écran tactile, on peut noter un article publié par Wang et al. intitulé « An Accelerometer-Based Digital Pen With a Trajectory Recognition Algorithm for Handwritten Digit and Gesture Recognition » (IEEE TRANSACTIONS ON INDUSTRIAL ELECTRONICS, VOL. 59, NO. 7, JULY 2012), qui décrit un stylo électronique utilisant un accéléromètre pour reconstruire la trajectoire en 3 dimensions des mouvements de l'utilisateur afin de reconnaître des chiffres. Des techniques de prétraitement sont employés (calibration, filtrage, etc.) afin de définir des caractéristiques du signal (moyenne, énergie, etc.), puis de sélectionner ces dernières pour l'apprentissage d'un classifieur spécifique tel qu'un PNN (pour Probabilistic Neural Network en anglais). Malheureusement, une telle technique n'est pas satisfaisante car le procédé réalise une segmentation des gestes chiffre par chiffre, ce qui impose un levé de crayon entre chaque caractère.

La demande de brevet US20120038652 divulgue un procédé adapté pour capturer une série de traits réalisés par un utilisateur déplaçant le terminal sur un support tel qu'une table. La méthode met en oeuvre au moins un capteur inertiel du terminal pour déterminer, à partir des accélérations mesurées, un tracé réalisé par l'utilisateur. Le document propose ensuite d'utiliser un algorithme de reconnaissance de caractère afin d'extraire le texte saisi. Cette technique n'est toutefois pas adaptée pour reconnaître une écriture cursive et elle impose que les caractères soient saisis un par un, ce qui limite la vitesse de saisie par un utilisateur.

La demande de brevet WO9521436A1 propose une reconnaissance de lettres manuscrites à partir d'un stylo électronique possédant au moins 4 accéléromètres. Le système prédit une information de mouvement angulaire à partir des données d'accélération linéaire.

Ainsi, les différentes techniques existantes procèdent en capturant un tracé à partir d'informations issues de capteurs inertiels avant d'appliquer un algorithme de reconnaissance d'écriture pour extraire le texte. Cette approche en deux étapes introduit des approximations dans le tracé et limite l'efficacité et l'ergonomie de la reconnaissance de caractère.

La présente invention vise à répondre aux inconvénients cités précédemment et propose une méthode simple et tangible à l'écriture manuscrite sans clavier ni écran tactile.

### RÉSUMÉ DE L'INVENTION

À cet effet, l'invention concerne un procédé selon la revendication 1.

Les données échantillonnées à une fréquence adaptée à partir de 3 capteurs différents permettent de déterminer en 3 dimensions et de manière fidèle les mouvements du terminal lorsqu'un utilisateur forme un mot en déplaçant une partie du terminal sur une surface plane comme il le ferait avec un stylo. Les données mesurées selon 3 axes et issues des 3 capteurs sont fusionnées, par exemple par concaténation, de façon à produire pour chaque période d'échantillonnage un vecteur à 9 dimensions caractéristique d'une position et d'une orientation du terminal. Les données fusionnées sont converties en une séquence de vecteurs caractéristiques reflétant les mouvements du terminal entre la détection d'un signal de début et d'un signal de fin d'un tracé. Contrairement à l'art antérieur, l'étape de reconnaissance d'un mot n'est pas réalisée à partir d'une image du tracé reconstituée, mais directement à partir d'un ensemble de séquences de vecteurs caractéristiques obtenues de manière itérative entre les signaux de début et de fin de saisie. La reconnaissance d'un mot tracé à l'aide du terminal ne comporte pas d'étape intermédiaire de reconstitution de l'image du tracé, ce qui limite la perte d'information en évitant l'introduction d'imprécisions et améliore nettement les performances de la reconnaissance par rapport à l'art antérieur, et en particulier la reconnaissance d'écriture cursive.

Selon une réalisation particulière, le procédé est tel qu'il comporte en outre une étape de validation du mot reconnu par un modèle linguistique.

Ainsi, lorsqu'un mot est reconnu à l'étape de reconnaissance, celui-ci est validé par un modèle linguistique. Par exemple, le mot peut être validé par un correcteur orthographique, un vérificateur syntaxique prenant en compte les mots reconnus précédemment, ou encore un vérificateur grammatical. Le procédé permet ainsi d'améliorer la qualité de la reconnaissance. Cette étape n'étant réalisée que pour les mots reconnus, le procédé permet d'optimiser les performances globales de la reconnaissance en évitant de valider un mot manifestement erroné. Il est entendu ici qu'un mot dit reconnu à l'étape de reconnaissance est un mot ayant une probabilité d'être correct supérieure à un seuil déterminé. Par exemple, un mot peut être considéré comme reconnu lorsque la probabilité qu'il soit correct est supérieure à 0.9.

Le procédé est tel que les signaux caractéristiques de début et de fin de saisie sont identifiés par une mise en correspondance entre une séquence de vecteurs caractéristiques et au moins une séquence de vecteurs caractéristiques enregistrée au préalable. Le début et la fin d'un mot sont détectés par la mise en correspondance de signaux caractéristiques issus des capteurs avec des signaux mesurés préalablement dont les caractéristiques sont mémorisées dans une base de données du terminal. Le procédé permet de segmenter temporellement des mots à partir des données échantillonnées sans qu'il soit nécessaire pour l'utilisateur de signaler par une action particulière le début et la fin d'un mot. Le procédé améliore ainsi l'ergonomie de la saisie, en évitant à l'utilisateur de signaler de manière explicite le début et/ou la fin d'un mot.

Le procédé est tel que le signal caractéristique d'un début de saisie est un signal inertiel caractéristique d'un micro choc sur une surface physique. Lorsque l'utilisateur appose le terminal contre la surface physique sur laquelle il s'apprête à tracer un mot, les capteurs du terminal produisent un signal correspondant à un micro choc entre le terminal et le support. La détection de ce signal permet de déterminer le début de la saisie d'un mot. D'autre part, la détection de ce micro choc permet de déterminer la position et l'orientation du terminal au début de la saisie. Ces données de référence permettent avantageusement de déterminer la façon dont l'utilisateur tient le terminal. Ainsi, les différents coins du terminal peuvent être utilisés pour saisir du texte, les données capturées étant interprétées selon la position de référence.

Selon un mode de réalisation particulier, le procédé est tel que l'étape de reconnaissance d'un mot est réalisée par un réseau de neurones bidirectionnel récurrent.

La reconnaissance est réalisée par un réseau de neurones bidirectionnel récurrent en entrée duquel sont présentées les données sous la forme d'une liste de séquences de vecteurs caractéristiques. Par exemple, le procédé peut utiliser un réseau de neurones bidirectionnel récurrent de type BLSTM (Bidirectional Long short Term Memory) décrit par Paul J. Werbos dans la publication « Backpropagation through time: what it does and how to do it », Proceedings of the IEEE, Volume 78, Issue 10, 1550 - 1560, Oct 1990. L'utilisation d'un réseau de neurones bidirectionnel récurrent permet d'atteindre des performances satisfaisantes pour la reconnaissance d'écriture manuscrite avec une complexité compatible avec une implémentation du procédé sur un terminal mobile de type Smartphone.

Selon un mode de réalisation particulier, le procédé est tel que le réseau de neurones est entraîné au préalable à partir de séquences de vecteurs caractéristiques correspondant à des mots du vocabulaire de la langue traitée.

Le réseau de neurones est entraîné au préalable à partir de séquences de vecteurs caractéristiques correspondant à des mots du vocabulaire de la langue traitée. Par exemple, la phase d'entrainement comprend un apprentissage du réseau pendant lequel des listes de séquences de vecteurs caractéristiques correspondants à des mots sont présentées successivement en entrée du réseau alors que les mots correspondants sont imposés en sortie du réseau. Le réseau doit alors s'adapter pour que les données d'entrée correspondent aux sorties. Le réseau de neurones est ainsi apte à reconnaître rapidement les mots pour lesquels il a été entraîné au préalable.

Selon un mode de réalisation particulier, le procédé est tel que l'étape de conversion des signaux en séquence de vecteurs caractéristiques comprend des étapes de :

- Calibration des signaux issus des capteurs,
- Débruitage du signal calibré par application d'un filtre passe bas, et
- Approximation et normalisation des signaux filtrés.

La calibration des signaux issus des capteurs consiste à modifier les valeurs issues des capteurs par les mesures de capteurs prises au repos dans un espace référentiel commun. De cette façon, le procédé permet de compenser d'éventuels biais introduits par les capteurs ou par la façon dont l'utilisateur tient le terminal. L'application d'un filtre passe bas permet de supprimer des données indésirables du signal avant son approximation. L'approximation du signal permet de simplifier le signal temporel en portion de droites. Cette simplification du signal permet de réduire la complexité du traitement et permet la construction de séquences de vecteurs caractéristiques directement exploitables pour la reconnaissance d'écriture manuscrite et la détection du début et de la fin de la saisie.

- Selon un autre aspect, l'invention concerne un dispositif selon la revendication 6.

L'invention concerne aussi un terminal comprenant un tel dispositif de reconnaissance d'écriture. L'invention concerne également un programme d'ordinateur comportant les instructions pour l'exécution du procédé de reconnaissance d'écriture, lorsque le programme est exécuté par un dispositif selon la revendication 6.

L'invention concerne aussi un support d'informations lisible par un dispositif selon la revendication 6 sur lequel est enregistré un programme d'ordinateur comprenant des instructions pour l'exécution des étapes du procédé de reconnaissance d'écriture.

Les différents modes ou caractéristiques de réalisation précités peuvent être ajoutés indépendamment ou en combinaison les uns avec les autres, aux étapes du procédé reconnaissance d'écriture.

Les serveurs, terminaux, dispositifs, programmes et supports d'informations présentent au moins des avantages analogues à ceux conférés par le procédé de reconnaissance décrit ci-dessus.

LISTE DES FIGURES

D'autres caractéristiques et avantages de l'invention apparaîtront plus clairement à la lecture de la description suivante d'un mode de réalisation particulier et des dessins annexés, parmi lesquels :

- La **figure 1** illustre un terminal utilisé par un utilisateur pour saisir du texte selon l'invention,
- La **figure 2** montre sous forme de diagramme les différentes étapes pour mettre en oeuvre le procédé selon un mode particulier de réalisation de l'invention,
- La **figure 3** représente de manière schématique l'architecture d'un dispositif adapté pour mettre en oeuvre l'invention, selon une réalisation particulière.

DESCRIPTION DÉTAILLÉE

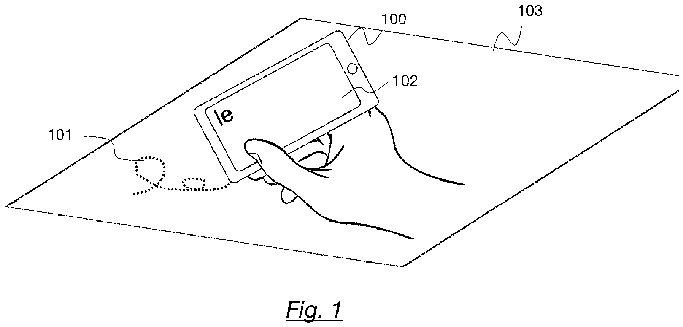

Une réalisation particulière de l'invention va maintenant être décrite en références aux figures 1 à 3.

La **figure 1** représente un terminal 100 dans la main d'un utilisateur. Ce terminal 100 est un terminal intelligent tel qu'un Smartphone. Ce type de terminal est équipé d'un processeur et d'une mémoire et est adapté pour exécuter des programmes d'ordinateur comprenant des instructions pour l'exécution de diverses applications. Par exemple, des applications peuvent être téléchargées depuis un serveur par l'intermédiaire d'une connexion Internet et enregistrées dans une mémoire persistante du terminal, telle qu'une mémoire flash par exemple. Les instructions du programme d'une application peuvent être chargées dans une mémoire RAM (Random Access Memory) du terminal pour être exécutées par le processeur. Le terminal 100 comprend en outre des capteurs adaptés pour mesurer des déplacements du terminal. En particulier, le terminal 100 comporte un capteur de type accéléromètre adapté pour mesurer les accélérations subies par le terminal selon 3 axes, et un capteur apte à mesurer des vitesses angulaires, comme par exemple un gyromètre adapté pour mesurer des rotations du terminal selon 3 axes. Le terminal comprend également un capteur de champ magnétique, comme par exemple un magnétomètre apte à mesurer un champ magnétique selon 3 axes. Ainsi, une application téléchargée dans une mémoire du terminal peut comporter des instructions pour obtenir des valeurs mesurées par les différents capteurs et déterminer les changements de position et d'orientation du terminal par rapport à une position et une orientation de référence. Ces différents capteurs peuvent être utilisés pour déterminer les déplacements ainsi que l'orientation du terminal lorsqu'il manipulé par un utilisateur.

L'utilisateur tient le terminal à la manière d'un stylo et forme un mot 101 en déplaçant le coin supérieur gauche du terminal contre un support 103 tel qu'une table. Bien entendu, le tracé 101 n'est pas visible sur le support car le terminal 100 n'est pas un stylo. Les positions et orientations successives du terminal sont mesurées à l'aide des capteurs pendant le tracé du mot 101. Le terminal 100 met en oeuvre la présente invention selon un mode de réalisation particulier pour afficher sur un écran 102 le mot 101 formé par l'utilisateur.

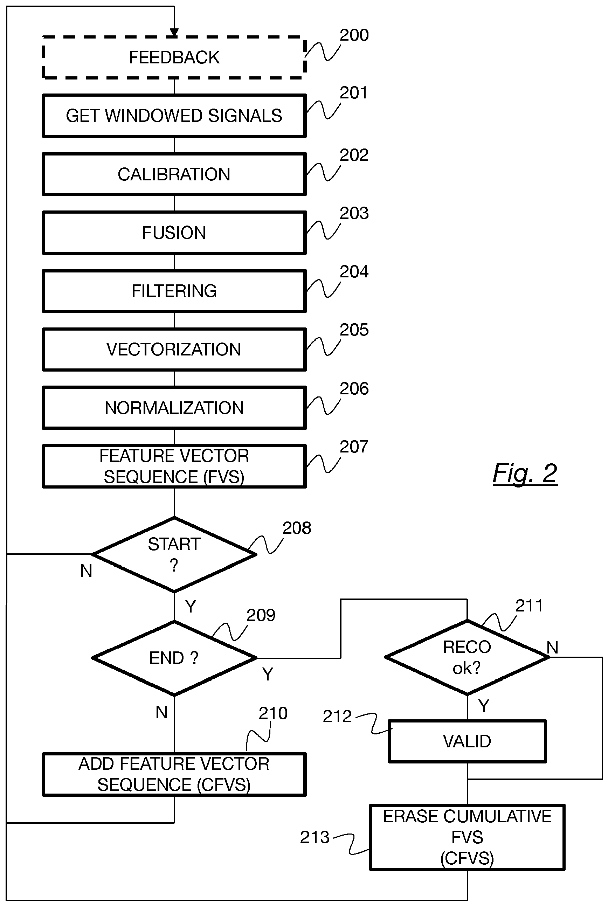

La **figure 2** représente les principales étapes du procédé de reconnaissance selon un mode particulier de réalisation de l'invention.

Lors d'une première étape optionnelle 200, le terminal informe l'utilisateur de son état par des retours (visuel, sonore, ou tactile) afin d'inviter par exemple l'utilisateur à commencer ou continuer une saisie. Par exemple, le terminal peut émettre une vibration pour indiquer à l'utilisateur qu'il est prêt pour la saisie ou afficher un message sur un écran.

À l'étape 201, le terminal obtient des informations de déplacement du terminal auprès de capteurs inertiels embarqués. Par exemple, le terminal obtient des données d'accélération selon 3 axes à partir d'un accéléromètre, des données de vitesse angulaire représentatives de rotations subies par le terminal selon 3 axes, et des données issues d'un magnétomètre adapté pour déterminer l'orientation du terminal par rapport à un champ magnétique, et en particulier par rapport au champ magnétique terrestre. Les données issues des capteurs sont par exemple échantillonnées à une fréquence suffisamment élevée pour que le jeu de données soit représentatif du tracé, mais suffisamment basse pour que ces données puissent être traitées par un terminal mobile. Par exemple, une fréquence d'échantillonnage de 100 Hertz permet d'obtenir une résolution du signal satisfaisante sans toutefois produire une quantité trop importante de données. Les signaux ainsi capturés sont mémorisés en utilisant une fenêtre temporelle glissante adaptée pour mémoriser les signaux produits durant l'écriture d'un mot. Par exemple, une fenêtre temporelle de 50 millisecondes peut être utilisée.

Les signaux capturés sont calibrés lors d'une étape 202. Ainsi, les valeurs retournées par les capteurs sont modifiées de façon à compenser d'éventuels biais pouvant affecter les mesures. De tels biais peuvent être introduits par les capteurs par exemple. La calibration peut être réalisée en corrigeant les mesures retournées par les capteurs avec une valeur d'écart par rapport à un référentiel. Par exemple, la valeur de l'écart peut être calculée par une différence entre une valeur de référence et les valeurs retournées par les capteurs lorsque le terminal est dans une position de repos prédéfinie.

Les données issues des différents capteurs sont fusionnées à l'étape 203. Ces données sont par exemple concaténées échantillon par échantillon. Par exemple, si { acc_x(t), acc_y(t), acc_z(t) } sont les valeurs issues du capteur d'accélération, { gyro_x(t), gyro_y(t), gyro_z(t) } les valeurs du capteur de vitesse angulaire, et { mag_x(t), mag_y(t), mag_z(t) } les valeurs du champ magnétique mesurées par un capteur de champ magnétique, alors le résultat de la fusion est un vecteur à 9 dimensions noté { acc_x(t), acc_y(t), acc_z(t), gyro_x(t), gyro_y(t), gyro_z(t), mag_x(t), mag_y(t), mag_z(t) }, c'est à dire qu'à chaque période de temps, le procédé considère un vecteur à 9 dimensions. Le procédé se différencie des approches utilisant chaque dimension du signal de façon indépendante, ou des approches concaténant les valeurs homogènes d'un même capteur, en regroupant des données hétérogènes par nature, car provenant de capteurs différents, mais corrélées puisque réagissant au même mouvement.

Des techniques classiques de traitement du signal sont appliquées à l'étape 204 pour dé-bruiter l'information et rendre les caractéristiques saillantes avec un filtrage passe-bas. Par exemple, le procédé peut utiliser un filtre passe-bas discret, de paramètre $\beta$ définit comme suit :
Soit G le geste non filtré, le geste filtré *GF* est défini par :

$$GF\text{t+1} = (1-\beta).G\text{t} + \beta.GF\text{t}$$

De source expérimentale, les performances du procédé sont optimales lorsque $\beta$=0.78.

Lors de l'étape 205, les signaux sont approximés de façon à simplifier le signal par des segments de droites. Par exemple, l'étape d'approximation peut être réalisée par application d'un algorithme tel que celui présenté dans l'article intitulé « On the Approximation Of Curves By Line Segments Using Dynamic Programming-II » publié en février 1962 par Richard Bellman et Bella Kotkin dans le cadre de « United States Air force Project Rand ». L'expérience a montré que le procédé est particulièrement efficace lorsque l'algorithme d'approximation est configuré avec un paramètre d'erreur locale à 0.12.

À l'étape 206, les vecteurs sont normalisés selon une technique classique permettant d'obtenir des valeurs comprises dans l'intervalle [0..1] afin de compenser les différences d'amplitudes des valeurs produites par les différents capteurs. Les étapes 201 à 206 permettent ainsi d'obtenir un signal simplifié dont les caractéristiques sont saillantes et décrivent au mieux l'information utile. Ce traitement préalable des signaux permet d'obtenir une séquence de vecteurs caractéristique, (FVS pour « Feature Vector Sequence » en anglais) à l'étape 207.

Le terminal vérifie à l'étape 208 si un signal de début de saisie a déjà été détecté. Pour cela, le terminal peut consulter par exemple une variable booléenne « STARTED » mémorisée à cet effet. Si la variable « STARTED » est positionnée à « VRAI », le terminal exécute directement l'étape 209. Si la variable « STARTED » est positionnée à « FAUX », une détection est réalisée à l'étape 208. La détection est réalisée à partir de la séquence FVS obtenue à l'étape 207, par une mise en correspondance de la séquence avec une base de connaissance regroupant des exemples de séquences FVS correspondant au début de saisie de mots. Cette base de connaissance est par exemple une base de données constituée au préalable. Selon une réalisation particulière, le signal de début de saisie correspond au signal généré par les capteurs suite au micro-choc résultant du contact entre le terminal et la surface physique lorsque l'utilisateur s'apprête à former un mot. Ainsi, des séquences FVS correspondant à un début de saisie sont mémorisées dans une base de données et utilisés en comparaison avec la séquence FVS obtenue à l'étape 207 pour détecter le début de la saisie. La recherche de correspondance peut être réalisée par la mise en oeuvre d'un algorithme de déformation temporelle dynamique (DTW, pour Distance Time Warping en anglais). Un tel algorithme permet de mesurer la similarité entre deux suites qui peuvent varier au cours du temps, comme par exemple deux séquences FVS.

Lorsqu'aucune correspondance n'est trouvée avec une séquence FVS signalant le début de saisie, les étapes 200 à 208 décrites précédemment sont répétées afin d'obtenir une nouvelle séquence FVS qui sera à nouveau mise en correspondance avec les séquences FVS de la base de données pour détecter un début de saisie.

Lorsqu'une correspondance est détectée, le terminal mémorise le fait qu'une saisie a débuté en affectant à la variable booléenne « STARTED » la valeur « VRAI ».

À l'étape 209, le terminal recherche une correspondance entre la séquence FVS obtenue à l'étape 207 avec un élément d'une base de connaissance regroupant des exemples de séquences FVS définissant la fin de saisie de mots. Cette base de connaissance est par exemple une base de données constituée au préalable avec des séquences FVS correspondant à la fin de la saisie. Comme à l'étape 208, la mise en correspondance de la séquence FVS obtenue à l'étape 207 avec un des éléments de la base de données peut être réalisée par un algorithme de déformation temporelle dynamique (DTW, pour Distance Time Warping en anglais). Selon une réalisation particulière, le signal de fin de saisie correspond au signal généré par les capteurs suite à un geste particulier effectué par l'utilisateur lorsqu'il a terminé la saisie d'un mot, le geste correspondant par exemple à la fin du contact entre le terminal et le support physique.

Si aucune correspondance n'est trouvée entre la séquence FVS obtenue à l'étape 207 et un élément de la base de connaissance contenant les exemples de séquences FVS de fin de saisie, la séquence FVS obtenue à l'étape 207 est ajoutée à une liste de séquences FVS (noté CFVS, pour Cumulative Feature Vector Sequence en anglais) à l'étape 210. Selon une réalisation particulière, la liste CFVS est une liste dont chaque élément est une séquence FVS. Suite à l'ajout de la séquence dans la liste, et tant qu'aucune séquence de fin de saisie n'est détectée, le terminal répète l'exécution des étapes 200 à 210 décrites plus haut.

Lorsqu'à l'étape 209, une correspondance entre la séquence FVS obtenue à l'étape 207 et un élément de la base de connaissance contenant les exemples de séquences FVS de fin de saisie est détectée, la liste CFVS contient les séquences FVS correspondant à un mot saisi par l'utilisateur. Cette liste est alors utilisée à l'étape 211 pour effectuer la reconnaissance du mot saisi. Selon un mode de réalisation particulier, le terminal utilise un réseau de neurones BLSTM (pour Bidirectional Long short Term Memory en anglais) avec une classification temporelle connexionniste. Un tel réseau de neurones est décrit dans le document « Connectionist temporal classification: Labelling unsegmented sequence data with récurrent neural networks », Alex Graves and Santiago Fernàndez and Faustino Gomez, ICML 2006.

Selon un mode de réalisation particulier, le réseau comprend 150 neurones LSTM (Long short Term Memory en anglais), un taux d'apprentissage de 4.5e-4 et un momentum de 0.15. Ce réseau a été entraîné au préalable à partir de listes CFVS correspondant à différents mots du vocabulaire de la langue traitée. Le réseau est entraîné d'une manière classique, en présentant une liste CFVS en entrée tout en imposant en sortie le mot correspondant. Le réseau reconnaît alors un mot à partir de la liste de séquences de vecteurs caractéristiques constituée à l'étape 210 et associe de façon classique un score de confiance à cette reconnaissance. Le score de confiance correspond à une probabilité que le réseau de neurones ait correctement reconnu un mot.

Si le score de confiance est suffisant, par exemple supérieur à 0.9, le mot reconnu est validé à l'étape 212. Sinon, le terminal exécute directement l'étape 213.

Lors de l'étape 212, le mot reconnu est validé à partir d'un modèle de langage afin de s'assurer que le mot existe dans le vocabulaire de la langue traitée et qu'il est en bonne adéquation avec les autres mots déjà reconnu par le système, en prenant par exemple en compte l'orthographe, la syntaxe ou la grammaire. Pour cela, le mot peut par exemple être soumis à un module de correction orthographique. Si à l'issue de cette étape de validation le mot reconnu est considéré valide, le terminal effectue un retour adéquat vers l'utilisateur. Par exemple, le mot reconnu est affiché sur l'écran du terminal ou sur un écran associé au terminal.

Lorsque le score de confiance obtenu à l'étape 211 n'est pas satisfaisant, l'étape 212 de validation n'est pas effectuée afin d'améliorer les performances globales de la reconnaissance en évitant de valider un mot ayant de grande chances de ne pas être correct. L'invention utilise ici de façon avantageuse le score de confiance pour économiser des ressources et du temps de calcul, en évitant d'exécuter l'étape de validation lorsque le mot n'est probablement pas correct.

À l'étape 213, la liste CFVS constituée par itérations successives des étapes 200 à 210 et soumise en entrée du réseau de neurones de reconnaissance lors de l'étape 211 est réinitialisée de façon à libérer les ressources nécessaires à la reconnaissance d'un nouveau mot. La variable « STARTED » est également positionnée à « FAUX » lors de cette étape.

Le terminal est alors prêt pour une nouvelle saisie de texte. L'étape 200 peut être à nouveau effectuée pour informer l'utilisateur du résultat de la reconnaissance précédente. Par exemple, le terminal peut émettre une vibration pour indiquer à l'utilisateur qu'un mot a été correctement reconnu ou plusieurs vibrations pour indiquer qu'une erreur de reconnaissance est survenue.

L'invention permet ainsi la reconnaissance d'écriture manuscrite à partir d'un terminal utilisé comme un stylo. L'invention est particulièrement avantageuse car la reconnaissance se fait directement à partir des signaux issus des capteurs, sans étapes intermédiaire de reconstitution du tracé.

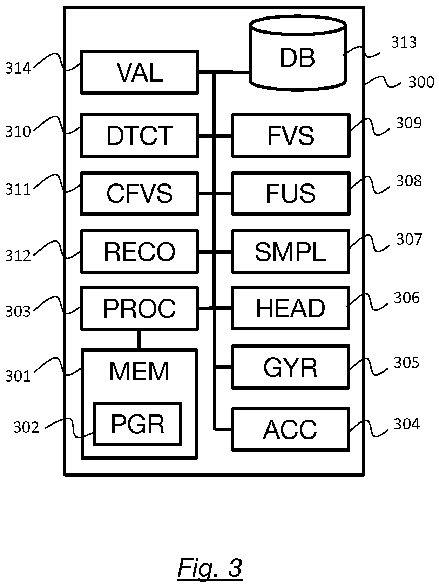

La **figure 3** représente un dispositif 300 de reconnaissance d'écriture manuscrite mettant en oeuvre le procédé, selon un mode particulier de réalisation de l'invention.

Le dispositif comprend un espace de stockage 301, par exemple une mémoire MEM, une unité de traitement 303 équipée par exemple d'un processeur PROC. L'unité de traitement peut être pilotée par un programme 302, par exemple un programme d'ordinateur PGR, mettant en oeuvre le procédé de reconnaissance d'écriture tel que décrit dans l'invention en référence à la figure 2, et notamment les étapes d'échantillonnage selon 3 axes et sur une fenêtre temporelle glissante, de signaux inertiels issus d'au moins 3 capteurs différents, de fusion des signaux échantillonnés en un vecteur à 9 dimensions pour chaque période d'échantillonnage, de conversion des signaux fusionnés en une séquence FVS à 9 dimensions, et lorsqu'un signal caractéristique d'un début de saisie a été détecté, de mémorisation de la séquence FVS dans une liste CFVS, de détection d'un signal caractéristique d'une fin de saisie, de détection d'un signal caractéristique d'une fin de saisie et de reconnaissance d'un mot à partir de la liste CFVS constituée sur la fenêtre temporelle.

À l'initialisation, les instructions du programme d'ordinateur 302 sont par exemple chargées dans une mémoire RAM (Random Access Memory en anglais) avant d'être exécutées par le processeur de l'unité de traitement 303. Le processeur de l'unité de traitement 303 met en oeuvre les étapes du procédé de reconnaissance selon les instructions du programme d'ordinateur 302.

Pour cela, le dispositif comprend, outre la mémoire 301, un capteur inertiel 304 adapté pour mesurer des accélérations selon 3 axes, comme par exemple un accéléromètre ACC, un capteur inertiel 305 adapté pour mesurer des vitesses angulaires selon 3 axes, comme par exemple un gyromètre GYR, et un capteur 306 adapté pour mesurer la valeur d'un champ magnétique selon 3 axes, comme par exemple un magnétomètre HEAD.

Le dispositif comprend en outre un module d'échantillonnage 307 (SMPL), adapté pour échantillonner des signaux issus des capteurs sur une fenêtre temporelle glissante. Le module d'échantillonnage peut par exemple utiliser une mémoire tampon circulaire dont la capacité est adaptée pour mémoriser des échantillons sur une période correspondant à la fenêtre temporelle, et une horloge adaptée pour provoquer périodiquement la lecture des sorties des capteurs et la mémorisation de ces valeurs dans la mémoire tampon circulaire.

Le dispositif comprend également un module de fusion 308 (FUS) des signaux échantillonnés en un vecteur à 9 dimensions pour chaque période d'échantillonnage. Le module de fusion est adapté pour synchroniser les échantillons correspondant à un même instant et à les concaténer en un vecteur à 9 dimensions représentatif, pour un instant donné, des mesures selon 3 dimensions relevées par les 3 capteurs.

Le dispositif comprend aussi un module 309 d'obtention d'une séquence FVS à 9 dimensions à partir des signaux fusionnés, le module étant adapté, selon une réalisation particulière, pour approximer les échantillons et les normaliser afin de constituer une séquence FVS.

Le dispositif comprend en outre un module de détection 310 (DTCT) de signaux caractéristiques d'un début et d'une fin de saisie à partir de la séquence FVS obtenue, par mise en correspondance d'une séquences FVS avec des séquences FVS contenues dans une base de données, comme par exemple dans la base de données 313 comprise dans le terminal.

Selon une réalisation particulière, la base de données 313 est extérieure au terminal et localisée par exemple sur un serveur d'un réseau. Le dispositif comporte alors un module de communication adapté pour émettre des requêtes vers le serveur hébergeant la base de données 313 et recevoir des réponses à ces requêtes. Le module de communication peut être par exemple une carte réseau Ethernet, ou une interface sans fil de type Wifi ou 3G.

Le dispositif comprend également un module de mémorisation 311 (CFVS) des séquences FVS obtenues entre la détection du signal de début et la détection du signal de fin de saisie dans une liste CFVS, un module de reconnaissance d'un mot à partir de la liste CFVS mémorisée et un module de validation 314 (VAL) d'un mot, mis en oeuvre lorsqu'un mot est reconnu.

Selon un mode particulier de réalisation, le dispositif peut être intégré dans un terminal portable de type Smartphone ou tablette, une montre, un bracelet, un stylo ou tout autre dispositif portable pourvu de capteurs adaptés.

## Revendications

1. Procédé de reconnaissance d'écriture manuscrite sur une surface physique à partir de signaux tridimensionnels issus de capteurs d'un terminal, les signaux étant obtenus à partir d'au moins 3 types de capteurs différents adaptés pour mesurer, selon 3 axes, des accélérations, des vitesses et la valeur d'un champ magnétique, ledit procédé comportant les étapes suivantes :

   - Échantillonnage (201) selon 3 axes et sur une fenêtre temporelle glissante, de signaux inertiels issus des capteurs,
   - Fusion (203) des signaux échantillonnés en un vecteur à 9 dimensions pour chaque période d'échantillonnage,
   - Conversion (207) des signaux fusionnés en une séquence de vecteurs caractéristiques à 9 dimensions, et
   Lorsqu'un signal caractéristique d'un début de saisie a été détecté (208):

      - Mémorisation (210) de la séquence de vecteurs caractéristiques dans une liste de séquences de vecteurs caractéristiques,

   Les étapes précédentes étant répétées jusqu'à la détection (209) d'un signal caractéristique d'une fin de saisie, le procédé comportant en outre à la détection dudit signal caractéristique d'une fin de saisie une étape de :

      - Reconnaissance (211) d'un mot à partir de la liste de séquences de vecteurs caractéristiques constituée entre la détection des signaux de début et de la fin de saisie,

les signaux caractéristiques de début et de fin de saisie étant identifiés par une mise en correspondance entre une séquence de vecteurs caractéristiques et au moins une séquence de vecteurs caractéristiques enregistrée au préalable, le signal caractéristique d'un début de saisie étant un signal inertiel caractéristique d'un micro choc sur une surface physique.

2. Procédé selon la revendication 1 **caractérisé en ce qu'**il comporte en outre une étape de validation du mot reconnu par un modèle linguistique.

3. Procédé selon l'une quelconque des revendications précédentes **caractérisé en ce que** l'étape de reconnaissance d'un mot est réalisée par un réseau de neurones bidirectionnel récurrent.

4. Procédé selon la revendication 3 **caractérisé en ce que** le réseau de neurones est entrainé au préalable à partir de séquences de vecteurs caractéristiques correspondant à des mots du vocabulaire de la langue traitée.

5. Procédé selon l'une quelconque des revendications précédentes **caractérisé en ce que** l'étape de conversion des signaux en séquence de vecteurs caractéristiques comprend des étapes de :

   - Calibration des signaux issus des capteurs,
   - Débruitage du signal calibré par application d'un filtre passe bas, et
   - Approximation et normalisation des signaux filtrés.

6. Dispositif de reconnaissance d'écriture manuscrite sur une surface physique à partir de signaux tridimensionnels issus de capteurs, les signaux étant obtenus à partir d'au moins 3 types de capteurs différents, ledit dispositif comportant :

   - Un capteur inertiel (304) adapté pour mesurer des accélérations selon 3 axes,
   - Un capteur inertiel (305) adapté pour mesurer des vitesses angulaires selon 3 axes,
   - Un capteur (306) adapté pour mesurer la valeur d'un champ magnétique selon 3 axes,
   - Un module d'échantillonnage (307), sur une fenêtre temporelle glissante, des signaux issus des capteurs,
   - Un module de fusion (308) des signaux échantillonnés en un vecteur à 9 dimensions pour chaque période d'échantillonnage,
   - Un module d'obtention (309) d'une séquence de vecteurs caractéristiques à 9 dimensions à partir des signaux fusionnés,

   - Un module de détection (310) de signaux caractéristiques d'un début et d'une fin de saisie à partir de la séquence de vecteurs caractéristiques obtenue mise en correspondance avec au moins une séquence de vecteurs caractéristiques enregistrée au préalable,
   - Un module de mémorisation (311) des séquences de vecteurs caractéristiques obtenues entre la détection du signal de début et la détection du signal de fin de saisie, dans une liste de séquences de vecteurs caractéristiques, les signaux caractéristiques de début et de fin de saisie étant identifiés par une mise en correspondance entre une séquence de vecteurs caractéristiques et au moins une séquence de vecteurs caractéristiques enregistrée au préalable, le signal caractéristique d'un début de saisie étant un signal inertiel caractéristique d'un micro choc sur une surface physique et
   - Un module de reconnaissance (312) d'un mot à partir de la liste de séquences de vecteurs caractéristiques mémorisée, et
   - Un module de validation (314) d'un mot, mis en oeuvre lorsqu'un mot est reconnu.

7. Terminal **caractérisé en ce qu'**il comporte un dispositif de reconnaissance d'écriture selon la revendication 6.

8. Programme d'ordinateur comportant les instructions pour l'exécution du procédé de reconnaissance d'écriture selon l'une quelconque des revendications 1 à 5, lorsque le programme est exécuté par un dispositif selon la revendication 6.

9. Support d'informations lisible par un dispositif selon la revendication 6 sur lequel est enregistré un programme d'ordinateur comprenant des instructions pour l'exécution des étapes du procédé de reconnaissance d'écriture selon l'une quelconque des revendications 1 à 5.

**Patentansprüche**

1. Verfahren zur Erkennung von handschriftlicher Schrift auf einer physischen Oberfläche anhand von dreidimensionalen Signalen, die von Sensoren eines Endgeräts stammen, wobei die Signale anhand von mindestens 3 verschiedenen Sensortypen erhalten werden, die geeignet sind, entlang von 3 Achsen Beschleunigungen, Geschwindigkeiten und den Wert eines Magnetfelds zu messen, wobei das Verfahren die folgenden Schritte umfasst:

   - Abtasten (201), entlang von 3 Achsen und über ein gleitendes Zeitfenster, von Trägheitssignalen, die von den Sensoren stammen,

- Zusammenführen (203) der abgetasteten Signale zu einem Vektor mit 9 Dimensionen für jede Abtastperiode,
- Umwandeln (207) der zusammengeführten Signale in eine Sequenz charakteristischer Vektoren mit 9 Dimensionen und
wenn ein charakteristisches Signal eines Eingabebeginns detektiert worden ist (208):

    - Speichern (210) der Sequenz charakteristischer Vektoren in einer Liste mit Sequenzen charakteristischer Vektoren,

wobei die vorhergehenden Schritte wiederholt werden bis zur Detektion (209) eines charakteristischen Signals eines Eingabeendes, wobei das Verfahren ferner bei der Detektion des charakteristischen Signals eines Eingabeendes einen Schritt umfasst:

    - Erkennen (211) eines Worts anhand der Liste mit Sequenzen charakteristischer Vektoren, die zwischen der Detektion der Eingabebeginn- und -endesignale erstellt wurde,

wobei die charakteristischen Eingabebeginn- und - endesignale durch ein Abgleichen einer Sequenz charakteristischer Vektoren und mindestens einer zuvor aufgezeichneten Sequenz charakteristischer Vektoren identifiziert werden, wobei das charakteristische Signal eines Eingabebeginn ein charakteristisches Trägheitssignal eines Mikrostoßes auf einer physischen Oberfläche ist.

2. Verfahren nach Anspruch 1, **dadurch gekennzeichnet, dass** es ferner einen Schritt des Validierens des erkannten Worts durch ein linguistisches Modell umfasst.

3. Verfahren nach einem der vorhergehenden Ansprüche, **dadurch gekennzeichnet, dass** der Schritt des Erkennens eines Worts von einem rekurrenten bidirektionalen neuronalen Netz ausgeführt wird.

4. Verfahren nach Anspruch 3, **dadurch gekennzeichnet, dass** das neuronale Netz zuvor anhand von Sequenzen charakteristischer Vektoren, die Wörtern des Vokabulars der verarbeiteten Sprache entsprechen, trainiert wird.

5. Verfahren nach einem der vorhergehenden Ansprüche, **dadurch gekennzeichnet, dass** der Schritt des Umwandelns der Signale in eine Sequenz charakteristischer Vektoren die Schritte umfasst:

    - Kalibrieren der von den Sensoren stammenden Signale,
- Entrauschen des kalibrierten Signals durch Anwenden eines Tiefpassfilters und
- Approximieren und Normieren der gefilterten Signale.

6. Vorrichtung zur Erkennung von handschriftlicher Schrift auf einer physischen Oberfläche anhand von dreidimensionalen Signalen, die von Sensoren stammen, wobei die Signale anhand von mindestens 3 verschiedenen Sensortypen erhalten werden, wobei die Vorrichtung umfasst:

    - einen Trägheitssensor (304), der zum Messen der Beschleunigungen entlang von 3 Achsen geeignet ist,
- einen Trägheitssensor (305), der zum Messen der Winkelgeschwindigkeiten entlang von 3 Achsen geeignet ist,
- einen Sensor (306), der zum Messen eines Magnetfelds entlang von 3 Achsen geeignet ist,
- ein Modul zum Abtasten (307), über ein gleitendes Zeitfenster, der von den Sensoren stammenden Signale,
- ein Modul zum Zusammenführen (308) der abgetasteten Signale zu einem Vektor mit 9 Dimensionen für jede Abtastperiode,
- ein Modul zum Erhalten (309) einer Sequenz charakteristischer Vektoren mit 9 Dimensionen anhand der zusammengeführten Signale,
- ein Modul zur Detektion (310) von charakteristischen Signalen eines Eingabebeginns und -endes anhand der erhaltenen Sequenz charakteristischer Vektoren abgeglichen mit mindestens einer zuvor aufgezeichneten Sequenz charakteristischer Vektoren,
- ein Modul zum Speichern (311) der Sequenzen charakteristischer Vektoren, die zwischen der Detektion des Beginnsignals und der Detektion des Eingabeendesignals erhalten werden, in einer Liste mit Sequenzen charakteristischer Vektoren, wobei die charakteristischen Eingabebeginn- und -endesignale durch ein Abgleichen einer Sequenz charakteristischer Vektoren und mindestens einer zuvor aufgezeichneten Sequenz charakteristischer Vektoren identifiziert werden, wobei das charakteristische Signal eines Eingabebeginn ein charakteristisches Trägheitssignal eines Mikrostoßes auf einer physischen Oberfläche ist, und
- ein Modul zum Erkennen (312) eines Worts anhand der gespeicherten Liste mit Sequenzen charakteristischer Vektoren und
- ein Modul zum Validieren (314) eines Wortes, das eingesetzt wird, wenn ein Wort erkannt wird.

7. Endgerät, **dadurch gekennzeichnet, dass** es eine Vorrichtung zur Erkennung von Schrift nach Anspruch 6 umfasst.

8. Computerprogramm, das Anweisungen umfasst, die bei der Ausführung des Programms durch eine Vorrichtung nach Anspruch 6 das Verfahren zur Erkennung von Schrift nach einem der Ansprüche 1 bis 5 ausführen.

9. Von einer Vorrichtung nach Anspruch 6 lesbares Informationsmedium, auf dem ein Computerprogramm gespeichert ist, das Anweisungen zum Ausführen der Schritte des Verfahrens zur Erkennung von Schrift nach einem der Ansprüche 1 bis 5 umfasst.

**Claims**

1. Method for recognizing handwriting on a physical surface on the basis of three-dimensional signals originating from sensors of a terminal, the signals being obtained from at least 3 different types of sensors which are suitable for measuring, on 3 axes, accelerations, speeds and the value of a magnetic field, said method comprising the following steps:

    - sampling (201), on 3 axes and over a sliding time window, inertial signals originating from the sensors,
    - fusing (203) the sampled signals into a 9-dimensional vector for each sampling period,
    - converting (207) the fused signals into a 9-dimensional feature vector sequence, and
    when a characteristic start-of-input signal has been detected (208) :

        - storing (210) the feature vector sequence in a list of feature vector sequences,

    the preceding steps being repeated until a characteristic end-of-input signal is detected (209), the method further comprising, upon said characteristic end-of-input signal being detected, a step of:

        - recognizing (211) a word on the basis of the list of feature vector sequences which is formed between the start- and end-of-input signals being detected,

    the characteristic start- and end-of-input signals being identified by matching a feature vector sequence and at least one previously stored feature vector sequence, the characteristic start-of-input signal being a characteristic inertial signal of a micro-impact on a physical surface.

2. Method according to Claim 1, **characterized in that** it further comprises a step of validating the recognized word by means of a language model.

3. Method according to either one of the preceding claims, **characterized in that** the step of recognizing a word is performed by a bidirectional recurrent neural network.

4. Method according to Claim 3, **characterized in that** the neural network is previously trained on feature vector sequences corresponding to words from the vocabulary of the language being processed.

5. Method according to any one of the preceding claims, **characterized in that** the step of converting the signals into a feature vector sequence comprises steps of:

    - calibrating the signals originating from the sensors,
    - removing noise from the calibrated signal by applying a low-pass filter, and
    - approximating and normalizing the filtered signals.

6. Device for recognizing handwriting on a physical surface on the basis of three-dimensional signals originating from sensors, the signals being obtained from at least 3 different types of sensors, said device comprising:

    - an inertial sensor (304) which is suitable for measuring accelerations on 3 axes,
    - an inertial sensor (305) which is suitable for measuring angular speeds on 3 axes,
    - a sensor (306) which is suitable for measuring the value of a magnetic field on 3 axes,
    - a module (307) for sampling, over a sliding time window, the signals originating from the sensors,
    - a module (308) for fusing the sampled signals into a 9-dimensional vector for each sampling period,
    - a module (309) for obtaining a 9-dimensional feature vector sequence from the fused signals,
    - a module (310) for detecting characteristic start- and end-of-input signals on the basis of the obtained feature vector sequence matched with at least one previously stored feature vector sequence,
    - a module (311) for storing the obtained feature vector sequences between the start-of-input signal being detected and the end-of-input signal being detected, in a list of feature vector sequences, the characteristic start- and end-of-input signals being identified by matching a feature vector sequence and at least one previously stored feature vector sequence, the characteristic start-of-input signal being a characteristic inertial signal of a micro-impact on a physical surface,
- a module (312) for recognizing a word on the basis of the stored list of feature vector sequences, and
- a module (314) for validating a word, implemented when a word is recognized.

7. Terminal **characterized in that** it comprises a device for recognizing writing according to Claim 6.

8. Computer program comprising instructions for executing the method for recognizing writing according to any one of Claims 1 to 5 when the program is executed by a device according to Claim 6.

9. Information medium which can be read by a device according to Claim 6 on which a computer program comprising instructions for executing the steps of the method for recognizing writing according to any one of Claims 1 to 5 is stored.

*Fig. 1*

*Fig. 2*

FEEDBACK — 200

GET WINDOWED SIGNALS — 201

CALIBRATION — 202

FUSION — 203

FILTERING — 204

VECTORIZATION — 205

NORMALIZATION — 206

FEATURE VECTOR SEQUENCE (FVS) — 207

START ? — 208

END ? — 209

ADD FEATURE VECTOR SEQUENCE (CFVS) — 210

RECO ok? — 211

VALID — 212

ERASE CUMULATIVE FVS (CFVS) — 213

*Fig. 3*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120038652 A
- WO 9521436 A1

**Littérature non-brevet citée dans la description**

- **WANG et al.** An Accelerometer-Based Digital Pen With a Trajectory Recognition Algorithm for Handwritten Digit and Gesture Recognition. *IEEE TRANSACTIONS ON INDUSTRIAL ELECTRONICS,* Juillet 2012, vol. 59 (7
- **PAUL J. WERBOS.** Backpropagation through time: what it does and how to do it. *Proceedings of the IEEE,* Octobre 1990, vol. 78 (10), 1550-1560
- **RICHARD BELLMAN ; BELLA KOTKIN.** On the Approximation Of Curves By Line Segments Using Dynamic Programming-II. *United States Air force Project Rand,* Février 1962
- **ALEX GRAVES ; SANTIAGO FERNÀNDEZ ; FAUSTINO GOMEZ.** Connectionist temporal classification: Labelling unsegmented sequence data with récurrent neural networks. *ICML,* 2006